# EUROPÄISCHE PATENTSCHRIFT

(11) **EP 2 675 605 B1**
(45) Veröffentlichungstag und Bekanntmachung des Hinweises auf die Patenterteilung: **15.04.2015**
(21) Anmeldenummer: 12703759.6
(22) Anmeldetag: 03.02.2012
(51) Int. Cl.: B29C 45/68

(54) **FORMSCHLIESSVORRICHTUNG**
MOULD CLAMPING DEVICE
DISPOSITIF DE FERMETURE D'UN MOULE

(30) Priorität: 15.02.2011 DE 102011011264
(43) Veröffentlichungstag der Anmeldung: 25.12.2013
(73) Patentinhaber: KraussMaffei Technologies GmbH, 80997 München (DE)
(72) Erfinder: REINHARDT, Thomas, 85653 Aying (DE)
(74) Vertreter: Wilhelm, Ludwig
(86) Internationale Anmeldenummer: PCT/EP2012/051857
(87) Internationale Veröffentlichungsnummer: WO 2012/110333

(56) Entgegenhaltungen:
- WO-A1-2005/118252
- JP-A- 2004 042 515
- JP-U- H0 345 118

## Beschreibung

Die Erfindung betrifft eine Formschließvorrichtung für eine Spritzgießmaschine gemäß dem Oberbegriff von Anspruch 1.

Aus der DE10040819A1 ist eine 2-Platten-Formschließvorrichtung bekannt, bei der zum Verfahren der beweglichen Formaufspannplatte ein Spindelantrieb zwischen der feststehenden und der beweglichen Formaufspannplatte vorgesehen ist. Ein Ende jeder Spindelwelle ist in der feststehenden Formaufspannplatte gelagert und als Kolben einer mit einem Druckmittel beaufschlagbaren Kolben-Zylinder-Einheit ausgebildet. Die Spindelwellen bilden somit gleichzeitig die Säulen der Formschließvorrichtung, die mit Schließkraft beaufschlagt werden. Dies ist insofern nachteilig, als der Spindelantrieb beim Schließkraftaufbau hohen mechanischen Belastungen ausgesetzt wird.

Die DE10316199A1 offenbart eine 2-Platten-Formschließvorrichtung mit einer feststehenden und einer beweglichen Formaufspannplatte, wobei zum Verfahren der beweglichen Formaufspannplatte ein elektromotorischer Spindelantrieb vorgesehen ist. An der feststehenden Formaufspannplatte ist ein AC-Stellmotor befestigt, dessen Antriebswelle mit einer Spindelwelle gekoppelt ist. Das dem AC-Stellmotor zugewandte Ende der Antriebsspindel ist in einer Lagerung in der feststehenden Formaufspannplatte drehbar gelagert. Das dem AC-Stellmotor abgewandte Ende der Spindelwelle ist durch eine drehfest mit der beweglichen Formaufspannplatte verbundene Spindelmutter hindurchgeführt. Mittels des AC-Stellmotors kann die Spindelwelle gedreht werden. Über die Spindelmutter wird die Drehbewegung der Spindelwelle in eine Linearbewegung der beweglichen Formaufspannplatte umgesetzt. Desweiteren sind vier Druckkissen an der feststehenden Formaufspannplatte zur Erzeugung der Schließkraft vorgesehen. Aufgrund der starren mechanischen Kopplung des Spindelantriebs zwischen den beiden Formaufspannplatten können mit den Druckkissen jedoch keine Spritzprägeverfahren ausgeführt werden.

Die WO 2005/118252 offenbart eine Formschließvorrichtung nach dem Oberbegriff von Anspruch 1.

Ausgehend von diesem Stand der Technik liegt der Erfindung die Aufgabe zugrunde, eine gattungsgemäße Formschließeinrichtung mit einem Spindelantrieb anzugeben, mit der auch Spritzprägeverfahren ausgeführt werden können.

Die Lösung dieser Aufgabe erfolgt durch eine Formschließeinheit mit den Merkmalen von Anspruch 1. Vorteilhafte Ausgestaltungen und Weiterentwicklungen finden sich in den Unteransprüchen.

Dadurch, dass eine mit dem Spindelantrieb in Wirkverbindung stehende Kolben-Zylinder-Einheit vorgesehen ist und zu beiden Seiten des Kolbens Druckmittelräume vorhanden sind, die wahlweise hydraulisch blockierbar oder untereinander verbindbar sind, kann der Spindelantrieb wahlweise mit der beweglichen Formaufspannplatte starr verbunden werden oder von dieser entkoppelt bzw. frei schwimmend sein. Wenn die Druckmittelräume hydraulisch blockiert sind, entspricht dies im Ergebnis der bisher bekannten starren mechanischen Kopplung oder Verbindung zwischen Spindelantrieb und beweglicher Formaufspannplatte. Wenn die Druckmittelräume hingegen untereinander verbunden sind, ist der Spindelantrieb von der beweglichen Formaufspannplatte entkoppelt und zwar in dem Sinne, dass in axialer Richtung eine Relativbewegung zwischen der beweglichen Formaufspannplatte und dem Spindelantrieb möglich ist. Die bewegliche Formaufspannplatte und der Spindelantrieb sind frei schwimmend untereinander. In diesem Zustand können Spritzprägeverfahren ausgeführt werden, bei denen die bewegliche Formaufspannplatte um vorgebbare Prägewege verfahren werden soll und zwar unabhängig bzw. losgelöst von dem Verfahrantrieb der beweglichen Formaufspannplatte, d.h. unabhängig bzw. losgelöst von dem Spindelantrieb.

Außerdem kommt es auch beim Standard-Spritzgießen, d.h. wenn keine Prägewege gefahren werden, in der Regel immer zu einer Bewegung der beweglichen Formaufspannplatte beim Schließkraftaufbau. Durch die Entkopplung des Spindelantriebs von der beweglichen Formaufspannplatte kann daher darauf verzichtet werden, den Spindelantrieb beim Schließkraftaufbau freizustellen, d.h. eine freie Bewegung der Spindelmutter gegenüber der Spindel zuzulassen. Falls jedoch eine solche Freistellung beim Schließkraftaufbau an sich vorgesehen ist, kommt es nicht zu einer Beschädigung des Spindelantriebs, wenn diese Freistellung aus irgendeinem Grunde nicht erfolgt.

In einer ersten Ausführungform kann die Spindelmutter an der beweglichen Formaufspannplatte und die Kolben-Zylinder-Einheit an der feststehenden Formaufspannplatte vorgesehen sein. In dieser Ausführungsform weist die Spindelwelle einen Abschnitt auf, der mit dem Kolben der Kolben-Zylinder-Einheit gekoppelt ist, wobei zu beiden Seiten des Kolbens Druckmittelräume gebildet werden, die wahlweise hydraulisch blockierbar oder untereinander verbindbar sind. Dadurch kann die bewegliche Formaufspannplatte gegenüber der feststehenden Formaufspannplatte frei schwimmend gestellt werden, wenn die Druckmittelräume untereinander verbunden sind. In diesem Zustand wird der Spindelantrieb beim Schließkraftaufbau keinerlei mechanischen Belastungen ausgesetzt. Die Spindelwelle ist freigestellt und kann sich - zusammen mit der beweglichen Formaufspannplatte - in dem Zylinder der Kolben-Zylinder-Einheit frei bewegen. Insbesondere können in diesem Zustand Spritzprägefunktionen ausgeführt werden, bei denen die bewegliche Formaufspannplatte gegenüber der feststehenden Formaufspannplatte um einen Prägeweg verfahren werden soll. Mittels der Druckkissen können somit Prägewege gefahren werden, wobei die Spindelwelle frei schwimmend in dem Zylinder der Kolben-Zylinder-Einheit mitbewegt wird, ohne dass sie nennenswerten mechanischen Belastungen ausgesetzt ist.

Für die Phase des Verfahrens der beweglichen Formaufspannplatte werden die Druckmittelräume hydraulisch blockiert, so dass in dieser Phase die Spindelwelle zusammen mit dem Kolben der Kolben-Zylinder-Einheit eine starre durchgehende Verbindung zwischen der feststehenden Formaufspannplatte und der beweglichen Formaufspannplatte bildet. Durch Betätigung des Spindelantriebs kann in dieser Phase die bewegliche Formaufspannplatte relativ zur feststehenden Formaufspannplatte verfahren werden.

Als Verdrehsicherung für die Spindelwelle kann die Spindelwelle einen Abschnitt mit einer Verzahnung aufweisen, die im Eingriff mit einem Gehäuse mit einer passenden Verzahnung steht. Insbesondere kann an der feststehenden Formaufspannplatte eine Zahnnabe als Verdrehsicherung für die Spindelwelle vorgesehen sein.

In einer zweiten Ausführungsform können sowohl die Spindelmutter als auch die Kolben-Zylinder-Einheit an der beweglichen Formaufspannplatte vorgesehen sein. Der Zylinder der Kolben-Zylinder-Einheit ist hierbei an der beweglichen Formaufspannplatte befestigt ist und die Spindelwelle ist an der feststehenden Formaufspannplatte drehfest und in axialer Richtung unverschiebbar befestigt. Desweiteren ist vorgeshen, dass die Spindelwelle durch eine Hülse hindurchgeführt ist, die gegenüber der beweglichen Formaufspannplatte drehfest ist, und die mit dem Kolben der Kolben-Zylinder-Einheit und mit dem Motor fest verbunden ist. Die Hülse kann dabei einteilig bzw. aus einem Stück gebildet sein. Sie kann aber auch aus mehreren geeigneten Teilstücken zusammengesetzt sein.

In einer bevorzugten Ausführungsform ist die Kolben-Zylinder-Einheit als Gleichgangzylinder ausgeführt. Dies hat den Vorteil, dass kein Druckmittel zu- oder abgeführt werden muss, wenn die Druckmittelräume untereinander verbunden sind. Beim Verschieben des Kolbens wird lediglich Druckmittel von dem sich verkleinernden Druckmittelraum in den sich vergrößernden Druckmittelraum verdrängt oder umgeleitet.

Jeder Spindelwelle kann ein eigener Motor zugeordnet sein. Es können aber auch mehrere Spindelwellen von einem gemeinsamen Motor betätigt werden, beispielsweise über ein geeignetes Riemengetriebe.

Bevorzugtes Anwendungsgebiet sind 2-Platten-Formschließvorrichtungen.Die Erfindung ist jedoch auch bei 3-Platten-Formschließeinrichtungen einsetzbar, bei denen zum Verfahren der beweglichen Formaufspannplatte ein Spindelantrieb vorgesehen ist. Es kommt lediglich darauf an, dass eine Freistellung des Spindelantriebs gegenüber der beweglichen Formaufspannplatte vorgesehen wird.

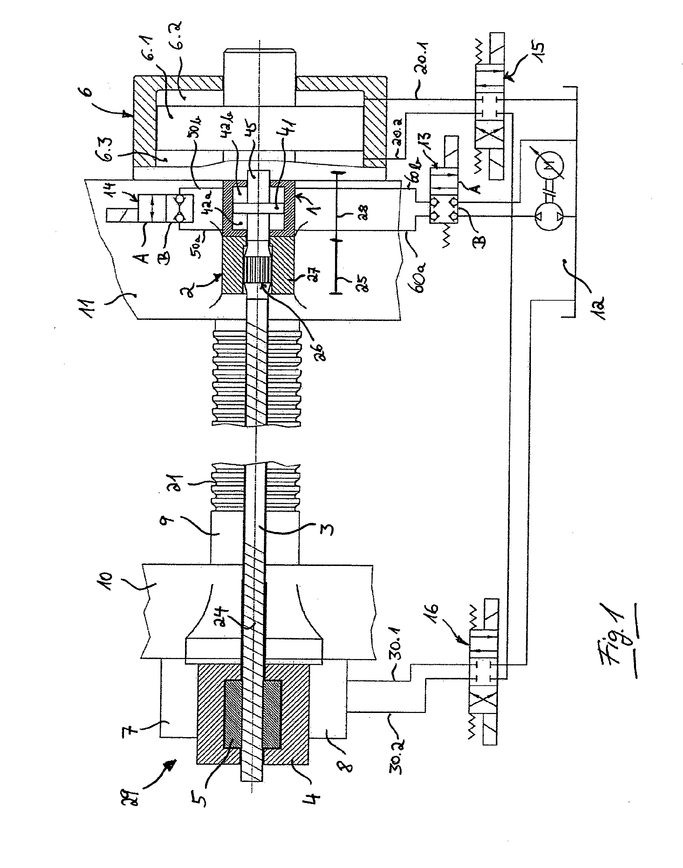

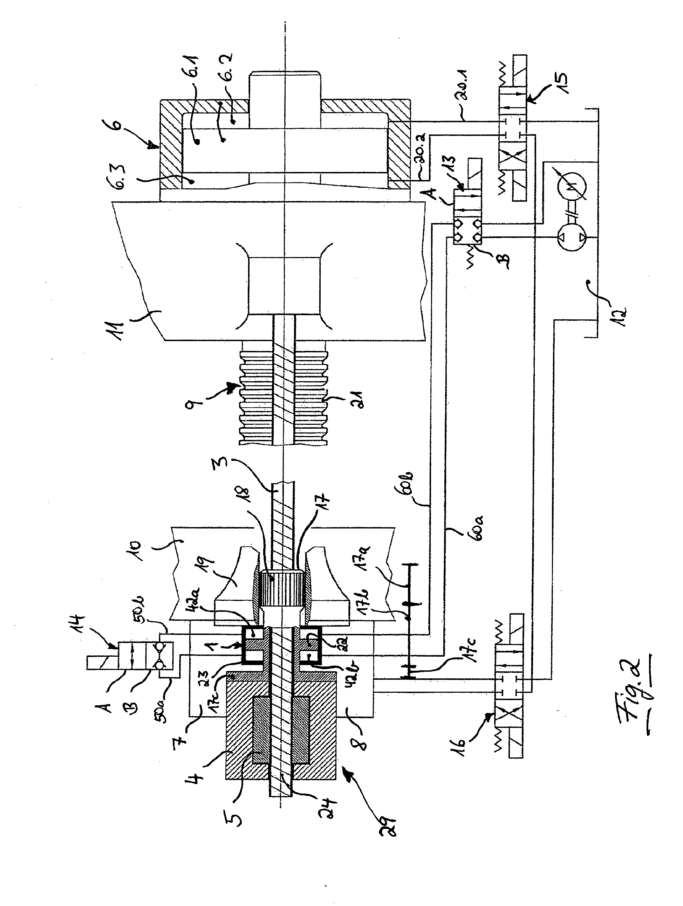

Nachfolgend soll die Erfindung anhand von Ausführungsbeispielen und unter Bezugnahme auf die Figuren 1 und 2 näher beschrieben werden.

Die Figur 1 zeigt einen Ausschnitt aus einer 2-Platten-Formschließvorrichtung mit einer feststehenden Formaufspannplatte 11 und einer beweglichen Formaufspannplatte 10. Zwischen den beiden Formaufspannplatten sind Säulen 9 vorgesehen, in der Regel vier Stück, die in den Eckbereichen der Formaufspannplatten positioniert sind. Die Säulen 9 durchsetzen die feststehende Formaufspannplatte 11 und sind an ihrem über die feststehende Formaufspannplatte hinaussragenden Ende mit einem Druckkissen 6 versehen. Die Säule 9 ist mit dem Kolben 6.1 des Druckkissens 6 verbunden und es werden zwei Druckmittelräume 6.2 und 6.3 gebildet, die über Druckleitungen 20.1 und 20.2 und unter Zwischenschaltung eines Steuerventils 15, beispielsweise in der Ausführung als 4/3-Wegeventil, mit einem Druckmittel aus einem Hydraulikaggregat 12 beaufschlagt werden können. An der beweglichen Formaufspannplatte sind Verriegelungselemente 7 vorgesehen, die mittels eines hydraulischen Antriebs 8 in Rillen 21 der Säule 9 ein- und ausgefahren werden können. Im eingefahrenen Zustand wird ein verriegelter und im ausgefahrenen Zustand ein entriegelter Zustand der Formschließvorrichtung gebildet. Zum Betätigen des hydraulischen Antriebs 8 ist dieser über Druckmittelleitungen 30.1 und 30.2 sowie ein Steuerventil 16, beispielsweise in der Ausführung als 4/3-Wegeventil, mit dem Hydraulikaggregat 12 verbunden.

Zum Verfahren der beweglichen Formaufspannplatte 10 ist auf der gleichen Höhe wie die Säule 9 und daher in der Figur 1 vor der Säule 9 befindlich dargestellt ein Spindelantrieb vorgesehen. Dieser umfasst einen an der beweglichen Formaufspannplatte 10 angebrachten Elektromotor 4, dessen Rotor mit einer Spindelmutter 5 gekoppelt ist oder dessen Rotor als Spindelmutter 5 ausgebildet ist. Die vom Elektromotor 4 drehantreibbare Spindelmutter 5 weist eine Gewinde auf, welches mit einem Gewinde 24 einer Spindelwelle 3 im Eingriff ist. Die Spindelwelle 3 weist einen Abschnitt 25 auf, der mit einer Aussenverzahnung 26 versehen ist, die im Eingriff mit einer passenden Innenverzahnung eines Gehäuses 27 steht. Beispielsweise kann das Gehäuse 27 als Zahnnabe 2 ausgebildet sein. Das Gehäuse 27 bzw. die Zahnnabe 2 einerseits und der Abschnitt 25 der Spindelwelle 3 andererseits bilden zusammen eine Verdrehsicherung der Spindelwelle 3. In Verlängerung des Abschnitts 25 schließt sich ein Abschnitt 28 der Spindelwelle 3 an, der mit dem Kolben 41 einer Kolben-Zylinder-Einheit 1 gekoppelt ist, so dass zu beiden Seiten des Kolbens 41 Druckmittelräume 42a und 42b gebildet werden. In der hier dargestellten und bevorzugten Ausführungsform ist die Kolben-Zylinder-Einheit als Gleichgangzylinder 1 ausgebildet. Der Abschnitt 28 der Spindelwelle 3 bildet eine Kolbenstange 45, die zu beiden Seiten des Kolbens 41 den gleichen Durchmesser aufweist, so dass die mit dem Druckmittel beaufschlagten Kreisringflächen des Kolbens 41 auf beiden Seiten des Kolbens die gleiche Fläche aufweisen. Die Abschnitte 25 und 28 können integraler Bestandteil der Spindelwelle 3 sein. Sie können aber auch als separate Bauteile ausgeführt sein, die untereinander und mit der Spindelwelle 3 verbunden sind, so dass die Spindelwelle 3, der Abschnitt 25 und die Kolbenstange 45 eine bauliche Einheit bilden.

Ein erstes Steuerventil 14 in der Ausführungsform eines 2/2-Wegeventils ist über Druckleitungen 50a und 50b mit den Druckmittelräumen 42a und 42b des Gleichgangzylinders 1 verbunden. Desweiteren ist ein zweites Ventil 13 in der Ausführungsform eines 4/2-Wegeventils über Druckmittelleitungen 60a und 60b mit den Druckmittelräumen 42a und 42b des Gleichgangzylinders 1 verbunden. Das 4/2-Wegeventil 13 dient lediglich zum Spülen und Entlüften des Gleichgangzylinders 1 und zwar im Zusammenwirken mit dem Steuerventil 14. Beim Spülen und Entlüften befinden sich die Ventile 13 und 14 jeweils in der Schaltstellung A. Während des Betriebs der Formschließeinheit befindet sich das 4/2-Wegeventil 13 dauerhaft in der Schaltstellung B.

Während des Betriebs der Formschließeinheit erfolgt das Freischalten und Blockieren der axialen Bewegung der Spindelwelle 3 in Richtung ihrer Längsachse ausschließlich über das Steuerventil 14. In der Schaltstellung A ist das Steuerventil 14 auf Freilauf geschaltet. Die Druckmittelräume 42a und 42b sind über die Druckmittelleitungen 50a und 50b verbunden. In dieser Schaltstellung ist die axiale Bewegung der Spindelwelle 3 freigeschaltet. In der Schaltstellung B ist das Steuerventil 14 in Sperrstellung geschaltet und die Druckmittelräume 42a und 42b sind hydraulisch blockiert. In dieser Schaltstellung ist die axiale Bewegung der Spindelwelle 3 blockiert.

Zum Auf- und Zufahren der Formschließvorrichtung, d.h. zum Verfahren der beweglichen Formaufspannplatte 10, werden die beiden Druckmittelräume 42a und 42b des Gleichgangzylinders 1 hydraulisch blockiert. Hierzu wird das Steuerventil 14 in die Schaltstellung B gebracht. Bei einer Bestätigung des Elektromotors 4 wird die Spindelmutter 5 gedreht. Diese Drehbewegung wird in eine Linearbewegung der beweglichen Formaufspannplatte 10 entlang der drehfest gelagerten und in Längsrichtung hydraulisch blockierten Spindelwelle 3 umgesetzt. Während des Schließkraftaufbaus sowie gegebenenfalls auch während des Schließkraftabbaus und der Erzeugung der Öffnungskraft ist der Gleichgangzylinder 1 freigestellt. Hierbei befindet sich das Steuerventil 14 in der Schaltstellung A, d.h. die Druckmittelräume 42a und 42b sind untereinander verbunden.

Desweiteren erlaubt die Freistellung des Gleichgangzylinders 1 die Ausführung von Spritzprägefunktionen mittels der Druckkissen 6. Derartige Spritzprägefunktionen zeichnen sich dadurch aus, dass die bewegliche Formaufspannplatte 10 mittels der Druckkissen 6 relativ zur feststehenden Formaufspannplatte um bestimmte Prägewege verfahren wird und zwar unter Aufrechterhaltung bestimmter Schließkräfte. Spritzprägefunktionen sind in vielfältigen Varianten aus dem Stand der Technik bekannt und brauchen daher an dieser Stelle nicht näher erläutert zu werden. Es sind lediglich geeignete Werkzeuge für Spritzprägefunktionen vorzusehen, die eine Vergrößerung oder Verkleinerung der Kavität ermöglichen, wenn die bewegliche Formaufspannplatte und die auf ihre angebrachte bewegliche Formhälfte relativ zu der feststehenden Formaufspannplatte und der darauf angebrachten feststehenden Formhälfte verfahren wird. Bei der Ausführung der Spritzprägefunktionen sind die Elektromotoren 4 in der Regel abgeschaltet oder in der Weise blockiert, dass keine Drehung der Spindelmutter 5 erfolgt. Beim Verfahren der beweglichen Formaufspannplatte 10 um einen Prägeweg mittels der Druckkissen 6 wird daher die in der Spindelmutter 4 sitzende und mit der Zahnnabe 2 drehfest gehaltene Spindelwelle 3 in dem Gleichgangzylinder 1 frei mitbewegt. Die bewegliche Formaufspannplatte 10 ist somit frei schwimmend, wenn der Gleichgangzylinder 1 freigestellt ist.

In der Figur 2 ist eine alternative Ausführungsform gezeigt. Der wesentliche Unterschied gegenüber der Ausführungsform der Figur 1 liegt in der Anordnung des Gleichgangzylinders 1. Im Unterschied zur Figur 1 ist der Gleichgangzylinder 1 nunmehr an der beweglichen Formaufspannplatte 10 vorgesehen. Die Spindelwelle 3 ist mit ihrem einen Ende drehfest und in axialer Richtung unverschiebbar in der feststehenden Formaufspannplatte 11 befestigt. Zur Abstützung und Übertragung des vom Elektromotor 4 erzeugten Drehmoments ist eine Hülse 17 mit einer Aussenverzahnung 18 in einem Halteelement 19 mit einer passenden Innenverzahnung vorgesehen. Die Hülse 17 ist teilweise geschnitten dargestellt. Dadurch ist zu erkennen, dass die Hülse 17 neben dem Abschnitt 17a mit der Aussenverzahnung einen Abschnitt 17b aufweist, der sich durch den Zylinder 23 des Gleichgangzylinders 1 erstreckt und in einem Flanschabschnitt 17c endet. In dem Zylinder 23 ist der Abschnitt 17b der Hülse mit einem Kolben 22 versehen. Der Gleichgangzylinder 1 bzw. der Zylinder 23 ist an der beweglichen Formaufspannplatte 10 befestigt, beispielsweise an dem Haltelement 19. Der Elektromotor 4 ist auf dem Flanschabschnitt 17c der Hülse 17 befestigt. Die Spindelwelle 3 ist durch die Hülse 17 hindurchgeführt und steht mit ihrem Gewindeabschnitt 24 im Eingriff mit einem passenden Gewinde der Spindelmutter 5.

Die Betriebsweise der Formschließvorrichtung gemäß der Figur 2 ist wie folgt. Während des Verfahrens des beweglichen Formaufspannplatte 10 ist der Gleichgangzylinder 1 hydraulisch blockiert. Das Steuerventil 14 befindet sich in der Schaltstellung B. Beim Betrieb des Elektromotors 4 wird die Spindelmutter 5 drehangetrieben. Infolgedessen wird die Einheit aus Elektromotor 4, Hülse 17 und Gleichgangzylinder 1 zusammen mit der beweglichen Formaufspannplatte 10 entlang der Spindelwelle 3 auf die feststehende Formaufspannplatte 11 zu oder von dieser weg verfahren, je nach Drehrichtung der Spindelmutter 5. Wenn die Schließeinheit zugefahren und verriegelt ist, kann Schließkraft aufgebaut werden. Ebenso können Spritzprägefunktionen wie oben beschrieben gefahren werden. Hierzu wird der Gleichgangzylinder 1 freigestellt. Das Steuerventil 14 befindet sich nunmehr in der Schaltstellung A. Wenn die Druckkissen 6 betätigt werden und eine Verschiebung der Säulen 9 eine Verschiebung der beweglichen Formaufspannplatte 10 bewirkt, passiert folgendes. Die Lage von Spindelwelle 3, Hülse 17, Spindelmutter 5 und Elektromotor 4 ist fixiert, nämlich einerseits drehfest über die Hülse 17 und andererseits axial fest über die in der feststehenden Formaufspannplatte 11 befestigte Spindelwelle 3. Die bewegliche Formaufspannplatte 10 kann sich gleichwohl frei gegenüber den vorgenannten ortsfesten Bestandteilen des Spindelantriebs bewegen, weil der Gleichgangzylinder 1 freigeschaltet ist (Schaltstellung A des Steuerventils 14). Dadurch kann sich der Zylinder 23 relativ zu dem Kolben 22 und den übrigen Bestandteilen des Spindelantriebs frei bewegen. Eine Bewegung der beweglichen Formaufspannplatte 10 wird somit nicht auf den Spindelantrieb übertragen. Die bewegliche Formaufspannplatte 10 ist frei schwimmend gegenüber dem Spindelantrieb.

Üblicherweise sind zwei Spindelantriebe zum Verfahren der beweglichen Formaufspannplatte 10 diagonal zueinander angeordnet.

Im Unterschied zu einer rein hydraulischen Formschließeinheit mit einem hydraulischen Fahrantrieb der beweglichen Formaufspannplatte werden deutlich weniger Ölmengen benötigt. Dadurch kann gegebenenfalls auch auf eine Kühlung der Hydraulikflüssigkeit verzichtet werden.

### Bezugszeichenliste

- 1: Gleichgangzylinder
- 2: Zahnnabe
- 3: Spindelwelle
- 4: Motor
- 5: Spindelmutter
- 6: Druckkissen
- 6.1: Kolben des Druckkissens
- 6.2, 6.3: Druckmittelräume
- 7: Verriegelungselemente
- 8: Antrieb der Verriegelungselemente
- 9: Säule
- 10: Bewegliche Formaufspannplatte
- 11: Feststehende Formaufspannplatte
- 12: Hydraulikaggregat
- 13: 4/2 - Spülventil - Gleichgangzylinder 40
- 14: 2/2 - Steuerventil - Gleichgangzylinder 40
- 15: 4/3 - Steuerventil - Druckkissen
- 16: 4/3 - Steuerventil - Verriegelung
- 17: Hülse
- 17a: Mit Aussenverzahnung versehender Abschnitt der Hülse 17
- 17b: Mit Kolben versehender Abschnitt der Hülse 17
- 17c: Mit Flansch versehender Abschnitt der Hülse 17
- 18: Aussenverzahnung
- 19: Halteelement
- 20.1, 20.2: Druckmittelleitungen
- 21: Rillen
- 22: Kolbenabschnitt der Hülse 17
- 23: Zylinder
- 24: Gewinde
- 25: Verzahnter Abschnitt der Spindelwelle 3
- 26: Außenverzahnung
- 27: Gehäuse mit Innenverzahnung
- 28: Abschnitt der Spindelwelle 3
- 29: Spindelantrieb
- 30.1, 30.2: Druckmittelleitungen
- 41: Kolben des Gleichgangzylinders 1
- 42a, 42b: Druckmittelräume
- 45: Kolbenstange
- 50a, 50b: Druckmittelleitungen
- 60a, 60b: Druckmittelleitungen

## Patentansprüche

1. Formschließvorrichtung für eine Spritzgießmaschine mit einer feststehenden (11) und einer beweglichen Formaufspannplatte (10), mit einem oder mehreren Druckkissen (6) zum Erzeugen einer Schließkraft sowie mit wenigstens einem Spindelantrieb (29) zum Verfahren der beweglichen Formaufspannplatte (10), wobei der Spindelantrieb (29) eine drehfeste Spindelwelle (3) und eine von einem Motor (4) drehantreibbare Spindelmutter (5) umfasst, und wobei die Spindelwelle (3) einen Gewindeabschnitt (24) aufweist, der im Eingriff mit einem passenden Gewinde der Spindelmutter (5) ist, wobei
eine mit dem Spindelantrieb (29) in Wirkverbindung stehende Kolben-Zylinder-Einheit (1) vorgesehen ist, wobei zu beiden Seiten des Kolbens (41, 22) der Kolben-Zylinder-Einheit (1) Druckmittelräume (42a, 42b) vorhanden sind, **dadurch gekennzeichnet, dass** die Druckmittelräume (42a, 42b) wahlweise hydraulisch blockierbar oder untereinander verbindbar sind.

2. Formschließvorrichtung nach Anspruch 1,
**dadurch gekennzeichnet, dass**
die Spindelmutter (5) an der beweglichen Förmaufspannplatte (10) und die Kolben-Zylinder-Einheit (1) an der feststehenden Formaufspannplatte (11) vorgesehen sind, und dass die Spindelwelle (3) einen Abschnitt (28) aufweist, der mit dem Kolben (41) der Kolben-Zylinder-Einheit (1) gekoppelt ist, wobei zu beiden Seiten des Kolbens (41) Druckmittelräume (42a, 42b) gebildet werden, die wahlweise hydraulisch blockierbar oder untereinander verbindbar sind.

3. Formschließvorrichtung nach Anspruch 1,
**dadurch gekennzeichnet, dass**
die Spindelmutter (5) und die Kolben-Zylinder-Einheit (1) an der beweglichen Formaufspannplatte (10) vorgesehen sind, dass der Zylinder (23) der Kolben-Zylinder-Einheit (1) an der beweglichen Formaufspannplatte (10) befestigt ist, dass die Spindelwelle (3) an der feststehenden Formaufspannplatte drehfest und in axialer Richtung unverschiebbar befestigt ist, und dass die Spindelwelle (3) durch eine Hülse (17) hindurchgeführt ist, die gegenüber der beweglichen Formaufspannplatte (10) drehfest ist, und die mit dem Kolben (22) der Kolben-Zylinder-Einheit (1) und mit dem Motor (4) fest verbunden ist.

4. Formschließvorrichtung nach einem der vorstehenden Ansprüche,
**dadurch gekennzeichnet, dass**
die Kolben-Zylinder-Einheit (1) als Gleichgangzylinder ausgebildet ist.

5. Formschließeinheit nach einem der vorstehenden Ansprüche,
**dadurch gekennzeichnet, dass**
für jede Spindelwelle (3) ein eigener Motor (4) vorgesehen ist.

6. Formschließvorrichtung nach einem der vorstehenden Ansprüche,
**dadurch gekennzeichnet, dass**
die Druckkissen (6) zur Erzeugung einer Schließkraft und zur Ausführung von Spritzprägefunktionen ausgebildet sind, wobei die Kolben (6.1) in den Druckkissen (6) über vorgebbare Prägewege verfahrbar sind.

7. Formschließvorrichtung nach einem der vorstehenden Ansprüche,
**dadurch gekennzeichnet, dass**
ein 2/2-Wegeventil (14) vorgesehen ist, das über Druckmittelleitungen (50a, 50b) mit den Druckmittelräumen (42a, 42b) der Kolben-Zylinder-Einheit (1) verbunden ist, und mit dem in der einen Schaltstellung (B) die Druckmittelräume (42a, 42b) hydraulisch blockiert und in der anderen Schaltstellung (A) die Druckmittelräume (42a, 42b) hydraulisch untereinander verbunden sind.

8. Formschließvorrichtung nach einem der vorstehenden Ansprüche und mit Säulen zur Aufnahme einer Schließkraft.

## Claims

1. A mould clamping device for an injection moulding machine with a fixed platen (11) and a movable platen (10), with one or more pressure pads (6) for generating a clamping force and with at least one spindle drive (29) for moving the movable platen (10), wherein the spindle drive (29) comprises a torque-proof spindle shaft (3) and a spindle nut (5) able to be rotationally driven by a motor (4), and wherein the spindle shaft (3) has a threaded portion (24), which is in engagement with a matching thread of the spindle nut (5), wherein
a piston-cylinder unit (1) is provided, in operative connection with the spindle drive (29), wherein on both sides of the piston (41, 22) of the piston-cylinder unit (1) pressure medium spaces (42a, 42b) are present,
**characterized in**
**that** the pressure medium spaces (42a, 42b) are able to be optionally blocked hydraulically or connected to one another.

2. The mould clamping device according to claim 1,
**characterized in that**
the spindle nut (5) is provided on the movable platen (10) and the piston-cylinder unit (1) is provided on the fixed platen (11), and that the spindle shaft (3) has a portion (28) which is coupled with the piston (41) of the piston-cylinder unit (1), wherein on both sides of the piston (41) pressure medium spaces (42a, 42b) are formed, which are able to be optionally blocked hydraulically or connected to one another.

3. The mould clamping device according to claim 1,
**characterized in that**
the spindle nut (5) and the piston-cylinder unit (1) are provided on the movable platen (10), that the cylinder (23) of the piston-cylinder unit (1) is fastened to the movable platen (10), that the spindle shaft (3) is fastened on the fixed platen in a torque-proof manner and non-displaceably in axial direction, and that the spindle shaft (3) is guided through a sleeve (17), which is torque-proof with respect to the movable platen (10), and which is securely connected with the piston (22) of the piston-cylinder unit (1) and with the motor (4).

4. The mould clamping device according to one of the preceding claims,
**characterized in that**
the piston-cylinder unit (1) is constructed as a synchronization cylinder.

5. The mould clamping unit according to one of the preceding claims,
**characterized in that**
for each spindle shaft (3) its own motor (4) is provided.

6. The mould clamping device according to one of the preceding claims,
**characterized in that**
the pressure pads (6) are constructed for generating a clamping force and for carrying out injection compression moulding functions, wherein the pistons (6.1) are movable in the pressure pads (6) over predeterminable compression paths.

7. The mould clamping device according to one of the preceding claims,
**characterized in that**
a 2/2-way valve (14) is provided, which is connected via pressure medium lines (50a, 50b) with the pressure medium spaces (42a, 42b) of the piston-cylinder unit (1), and with which in the one switching position (B) the pressure medium spaces (42a, 42b) are blocked hydraulically and in the other switching position (A) the pressure medium spaces (42a, 42b) are connected hydraulically to one another.

8. The mould clamping device according to one of the preceding claims and with columns to receive a clamping force.

## Revendications

1. Dispositif de fermeture d'un moule pour une machine de moulage par injection comprenant une plaque de serrage de moule fixe (11) et mobile (10), avec un ou plusieurs tampons de pression (6) pour créer une force de fermeture, ainsi qu'au moins un entraînement à broche (29) pour déplacer la plaque de serrage de moule mobile (10), sachant que l'entraînement à broche (29) comprend un arbre à broche (3) fixe en rotation et un écrou de broche (5) pouvant être entraîné en rotation par un moteur (4), et sachant que l'arbre à broche (3) présente un tronçon fileté (24) qui est en prise avec un filetage adapté de l'écrou de broche (5), sachant
qu'une unité piston-cylindre (1) coopérant avec l'entraînement à broche (29) est prévue, sachant que des deux côtés du piston (41, 22) de l'unité piston-cylindre (1) figurent des espaces de fluide sous pression (42a, 42b), **caractérisé en ce**
**que** les espaces de fluide sous pression (42a, 42b) peuvent être bloqués ou reliés hydrauliquement entre eux au choix.

2. Dispositif de fermeture d'un moule selon la revendication 1,
**caractérisé en ce que**
l'écrou à broche (5) est prévu sur la plaque de serrage de moule mobile (10) et l'unité piston-cylindre (1) est prévue sur la plaque de serrage de moule fixe (11), et que l'arbre à broche (3) présente un tronçon (28) qui est couplé au piston (41) de l'unité piston-cylindre (1), sachant que des deux côtés du piston (41) sont formés des espaces de fluide sous pression (42a, 42b) qui peuvent être bloqués ou reliés hydrauliquement entre eux au choix.

3. Dispositif de fermeture d'un moule selon la revendication 1,
**caractérisé en ce que**
l'écrou à broche (5) et l'unité piston-cylindre (1) sont prévus sur la plaque de serrage de moule mobile (10), que le cylindre (23) de l'unité piston-cylindre (1) est prévu sur la plaque de serrage de moule mobile (10), que l'arbre à broche (3) est fixe en rotation sur la plaque de serrage de moule fixe et fixé sans être mobile dans le sens axial, et que l'arbre à broche (3) est dirigé à travers un manchon (17) qui est fixe en rotation par rapport à la plaque de serrage de moule mobile (10) et qui est relié fixement au piston (22) de l'unité piston-cylindre (1) et au moteur (4).

4. Dispositif de fermeture d'un moule selon l'une des revendications précédentes,
**caractérisé en ce que**
l'unité piston-cylindre (1) est formée en tant que cylindre homocinétique.

5. Dispositif de fermeture d'un moule selon l'une des revendications précédentes,
**caractérisé en ce que**
chaque arbre à broche (3) est doté de son propre moteur (4).

6. Dispositif de fermeture d'un moule selon l'une des revendications précédentes,
**caractérisé en ce que**
les tampons de pression (6) sont conçus pour produire une force de fermeture et pour exécuter des fonctions de moulage par injection-compression, sachant que les pistons (6.1) peuvent être déplacés dans les tampons de pression (6) sur des trajets de compression prédéfinissables.

7. Dispositif de fermeture d'un moule selon l'une des revendications précédentes,
**caractérisé en ce qu'**
une soupape 2/2 voies (14) est prévue, qui est reliée aux espaces de fluide sous pression (42a, 42b) de l'unité piston-cylindre (1) par des lignes de fluide sous pression (50a, 50b) et avec laquelle, dans l'une position de branchement (B), les espaces de fluide sous pression (42a, 42b) sont bloqués hydrauliquement, et dans l'autre position de branchement (A), les espaces de fluide sous pression (42a, 42b) sont reliés hydrauliquement entre eux.

8. Dispositif de fermeture d'un moule selon l'une des revendications précédentes et comprenant des colonnes pour recevoir une force de fermeture.
